# EUROPÄISCHE PATENTSCHRIFT

(11) **EP 0 535 382 B1**
(45) Veröffentlichungstag und Bekanntmachung des Hinweises auf die Patenterteilung: **13.03.1996**
(21) Anmeldenummer: 92114890.4
(22) Anmeldetag: 01.09.1992
(51) Int. Cl.: H02J 3/46

(54) **Verfahren zum wirtschaftlichen Betrieb eines Inselnetzes mit erneuerbaren Energiequellen und Schaltungsanordnung zur Durchführung des Verfahrens**
Procedure for economical operation of an island network with renewable sources of energy and a circuit for execution of the procedure
Procédé pour l'exploitation économique d'un réseau d'île avec sources énergétiques renouvelables et circuit pour l'execution du procédé

(30) Priorität: 30.09.1991 DE 4132274
(43) Veröffentlichungstag der Anmeldung: 07.04.1993
(73) Patentinhaber: STN Systemtechnik Nord GmbH, D-28012 Bremen (DE)
(72) Erfinder: Kranert, Klaus, Dr.Ing., W-2000 Hamburg 56 (DE); Knirsch, Hermann, Dipl.-Ing., W-2000 Hamburg 63 (DE)
(74) Vertreter: Eisenführ, Speiser & Partner

(56) Entgegenhaltungen:
- EP-A- 0 047 867
- DE-A- 3 151 866
- US-A- 4 136 286

## Beschreibung

Die Erfindung betrifft ein Verfahren zum wirtschaftlichen Betrieb eines Inselnetzes mit unterschiedlichen, auch erneuerbaren Energiequellen, die Energiewandler speisen und eine Schaltungsanordnung zur Durchführung des Verfahrens gemäß dem Oberbegriff des Anspruch 1 bzw. 2.

Eine derartige Schaltungsanordnung ist aus der EP-B1-0 047 867 bekannt. Diese bekannte Schaltungsanordnung ermöglicht zwar eine wirtschaftliche Ausnutzung der Energiequellen, erlaubt aber keine Frequenzregelung für den Fall, daß alle vorhandenen generatorisch arbeitenden Energiewandler voll ausgefahren werden. Bei einem Netzbetrieb mit erneuerbaren Energiequellen ist aber eine maximale Aussteuerung aller Energiequellen auch im Inselnetz erwünscht, um alle Energien, die gewonnen werden, auszunutzen.

Der Erfindung liegt die Aufgabe zugrunde, ein Verfahren zum wirtschaftlichen Betrieb eines Inselnetzes mit erneuerbaren Energiequellen und eine Schaltungsanordnung zur Durchführung des Verfahrens zu schaffen, mit dem/der in einem Inselnetz mit erneuerbaren Energiequellen eine kontinuierliche Frequenz- und Leistungsregelung auch für den Fall möglich ist, daß die von den erneuerbaren Energiequellen abgegebene Leistung größer ist als die Summe der momentanen Verbraucherleistung.

Diese Aufgabe wird erfindungsgemäß durch die Merkmale des Anspruchs 1 bzw. 2 gelöst. Weiterbildungen sind in den Unteransprüchen angegeben.

Das erfindungsgemäße Verfahren bzw. die Schaltungsanordnung ermöglichen in vorteilhafter Weise eine kontinuierliche Ausnutzung von erneuerbaren Energiequellen (Sonne, Wind, Wasserkraft), wobei der gestellte Leistungsverbraucher des Energiespeichersystems vorteilhaft die Frequenz des Inselnetzes regelt. Durch Anwendung dieses Lösungsmerkmales lassen sich Instabilitäten und Netzausfälle vermeiden. In den Unteransprüchen ist aufgezeigt, daß bei steigendem Leistungsangebot der erneuerbaren Energiequellen und fallendem Inselnetz-Verbrauch noch weitere oder andersartige Leistungsverbraucher mit Energiespeichereffekten eingeschaltet werden können, die dann gemeinsam die Netzfrequenz regeln. Aus Redundanzgründen bzw. für außergewöhnliche Netz-Verhältnisse kann ein Dieselaggregat in das Netz integriert werden. Dazu ist im Unteranspruch 5 eine vorteilhafte Schaltung angegeben.

Anhand der Zeichnung wird ein Ausführungsbeispiel der Erfindung näher erläutert:
- Fig. 1: zeigt ein Blockschaltbild der Schaltungsanordnung und
- Fig. 2: zeigt ein Energiespeichersystem mit Akkumulatorenbatterien für den Einsatz in einer Schaltungsanordnung gemäß Fig. 1.

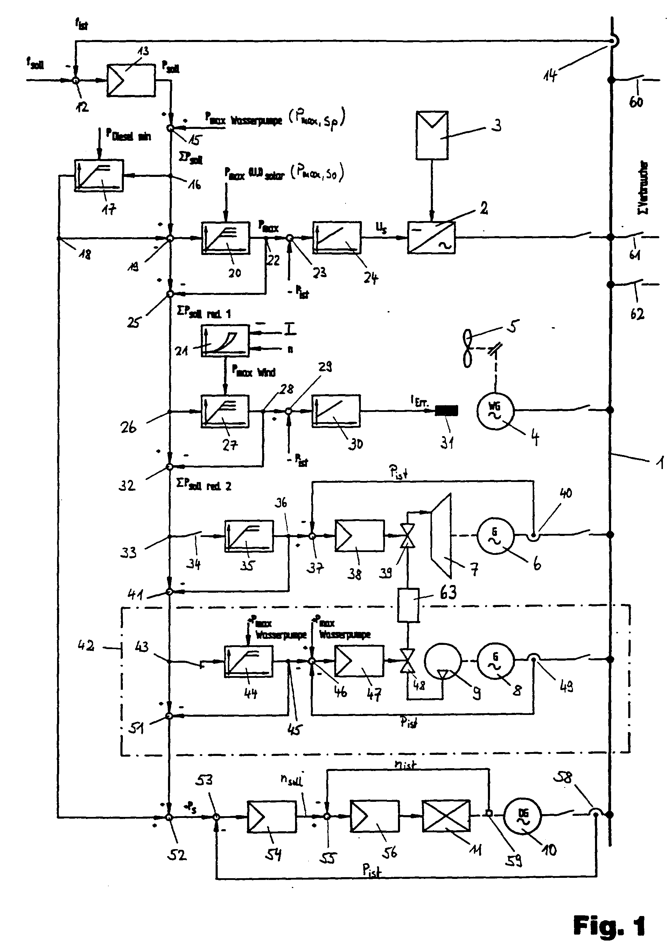

Die in Fig. 1 gezeigte Schaltungsanordnung besteht im wesentlichen aus einer Sammelschiene 1, Verbraucherabgängen 60, 61, 62, speisenden Aggregaten 2, 4, 6, 10, erneuerbaren Energiequellen 3, 5, einem Dieselaggregat 11, einer Wasserturbine 7, einem Energiespeichersystem 42 und aus Steuerkreisen für die Aggregate und das Energiespeichersystem. Die erneuerbare Energiequelle 3 ist als Solargenerator und die erneuerbare Energiequelle 5 ist als Windkraftwerk ausgeführt.

Den Steuerkreisen für die Aggregate ist eine Frequenzregelung überlagert, die mit einem Meßaufnehmer 14 von der Sammelschiene 1 einen Istwert fᵢₛₜ abgreift, diesen Wert mit einem Sollwert Fₛₒₗₗ an einer Vergleichsstelle 12 vergleicht und mit der Differenz der Werte einen Regelbaustein 13 speist. Der Regelbaustein 13 erzeugt daraus einen Gesamt-Leistungssollwert P_{**soll**}, der auf eine Addierstelle 15 gegeben ist.

An dieser Addierstelle 15 wird für den Fall, daß die momentan von den Aggregaten 2, 4, die von den erneuerbaren Energiequellen 3, 7 gespeist sind, abgebbare Summenleistung größer ist als der momentane GesamtLeistungsverbrauch der Verbraucher 60, 61, 62 ein Sollwert P_{**max,sp.**} zu dem Gesamt-Leistungssollwert P_{**soll**} addiert, so daß ein erhöhter Gesamt-Leistungssollwert P_{**soll,erh.**} gebildet ist. Der Sollwert P_{**max,sp.**} entspricht dem maximalen Leistungsbedarf des Energiespeichersystems 42, der beim Auffüllen des Systems auftritt. Von dem erhöhten Gesamt-Leistungssollwert P_{**soll,erh.**} wird an einer Vergleichsstelle 19 ein Leistungssollwert P_{**min,D.**} für einen Stand-by-Betrieb des Dieselaggregates 11 subtrahiert. Dazu wird der Sollwert P_{**soll,erh.**} von einer Verzweigungsstelle 16 aus auf einen Sollwertblock 17 gegeben, mit dem der Wert P_{**min,D.**} einstellbar ist. Von einer Verzweigungsstelle 18 aus ist dieser Leistungssollwert P_{**min,D.**} einmal auf die Vergleichsstelle 19 und zum anderen auf eine Addierstelle 52 gegeben, die dem Steuerkreis für das Dieselaggregat 11 zugeordnet ist. Die Sollwertdifferenz am Ausgang der Vergleichsstelle 19 ist auf den Steuerkreis für das Aggregat 2 mit der ersten Zuschaltpriorität gegeben, das von dem Solargenerator 3 gespeist ist. Über einen Begrenzungsblock 20 dieses Steuerkreises wird unter Berücksichtigung des Begrenzungswertes P_{**max,So.**}, welcher der momentanen vom Solargenerator abgegebenen Leistung entspricht, diese Sollwertdifferenz einer Vergleichsstelle 23 zugeführt. An dieser Vergleichsstelle 23 wird mit der Istleistung P_{**ist**} des Aggregates 2, das als Wechselrichter ausgeführt ist, eine Regeldifferenz gebildet, die im Regelbaustein 24 ausgeregelt wird. Der Regelbaustein 24 erzeugt eine Stellgröße zur Steuerung des Aggregates 2. Am Ausgang des Begrenzungsblockes 20 ist der Sollwert über eine Verzweigungsstelle 22 auf eine Vergleichsstelle 25 gegeben, an der mit diesem Sollwert und mit der Sollwertdifferenz aus der Vergleichsstelle 19 ein reduzierter Sollwert P_{**red.,1**} gebildet wird. Dieser reduzierte Sollwert P_{**red.,1**} ist an einer Verzweigungsstelle 26 dem Steuerkreis für das Aggregat 4 mit der zweiten Zuschaltpriorität und einer Vergleichsstelle 32 zugeführt. Das Aggregat 4 ist als Drehstromgenerator ausgebildet, auf den als erneuerbare Energiequelle 5 eine Windkraftanlage speist. Der Drehstromgenerator ist über seine Erregerwicklung 31 gesteuert. Dieser Steuerkreis ist entsprechend dem vorangehend beschriebenen Steuerkreis ausgebildet und besteht aus einem Begrenzungsblock 27, einer Vergleichsstelle 29, einem Regelbaustein 30 und einer Verzweigungsstelle 28. Zusätzlich ist noch ein Grenzwertblock 21 vorhanden, mit dem die momentan abgebbare maximale Leistung P_{**max,W.**} des Windkraftwerkes bestimmt wird. An der Vergleichsstelle 32 wird der reduzierte Sollwert P_{**red.,2**} gebildet.

Dieser reduzierte Sollwert P_{**red.,2**} gelangt auf eine Verzweigungsstelle 43, die zum Steuerkreis des Energiespeichersystems 42 gehört. Über einen Begrenzungsblock 44 wird unter Berücksichtigung des Begrenzungswertes P_{**max,sp.**} der reduzierte Sollwert P_{**red.,2**} einer Vergleichsstelle 46 zugeführt. An dieser Vergleichsstelle 46 wird der Leistungssollwert P_{**max,sp.**} - P_{**red.,2**} gebildet und mit dem Istwert P_{**ist**} des gestellten Leistungsverbrauchers 9 verglichen. Die aus dem letztgenannten Vergleich gewonnene Wertedifferenz wird einem Regelbaustein 47 zugeführt, der die Differenz ausregelt. Der Regelbaustein 47 wirkt auf ein Verstellventil 48 in der Speiseleitung des Energiespeichers 63. Der Istwert P_{**ist**} des gestellten Leistungsverbrauchers 9 ist mit einem Meßwandler 49 von der Speiseleitung des Energiewandlers 8 - dem Antriebsmotor der Wasserpumpe - abgegriffen. An einer Verzweigungsstelle 45, die sich dem Begrenzungsblock 44 anschließt, ist der reduzierte Sollwert P_{**red.,2**} abgegriffen und einer Vergleichsstelle 51 zugeführt, an der gegebenenfalls eine weitere Reduktion des Sollwertes für den Fall stattfindet, daß die Sollwertdifferenz P_{**red.,2**} - P_{**max,sp.**} > 0 ist. In diesem Fall wird diese Sollwertdifferenz auf die Addierstelle 52 des Steuerkreises für das Dieselaggregat 11 gegeben.

Die an der Addierstelle 52 aus der vorgenannten Sollwertdifferenz und dem Sollwert P_{**min,D**} gebildete Sollwertsumme wird auf eine Vergleichsstelle 53 gegeben, an welcher die Regeldifferenz für die Leistungsregelung des von dem Dieselaggregat 11 angetriebenen Aggregates 10 gebildet ist. Diese Regeldifferenz ist einem Regelbaustein 54 aufgeschaltet, der die Differenz ausregelt. Das aus dem Regelbaustein 54 ausgegebene Stellsignal steht als Drehzahlsollwert n_{**soll**} an einer Vergleichsstelle 55 an und wird dort mit dem Drehzahlistwert n_{**ist**} verglichen. Der Drehzahlistwert n_{**ist**} wird mit einem Meßaufnehmer 59 von der Generatorwelle abgegriffen. Die an der Vergleichsstelle 55 gebildete Regeldifferenz wird auf einen Regelbaustein 56 gegeben, der auf die Steuerung des Dieselaggregates 11 einwirkt.

Für den Fall, daß der Leistungsbedarf der Verbraucher 60, 61, 62 größer ist, als das momentane Energieangebot der erneuerbaren Energiequellen 3, 5 und des im Standby-Betrieb gefahrenen Dieselaggregates 11, ist unter der Voraussetzung eines ausreichend gefüllten Energiespeichers 63 diesem Speicher Energie zum Betrieb einer Wasserturbine 7 entnehmbar. Diese Wasserturbine 7 treibt ein Aggregat 6 an, das auf die Sammelschiene 1 speist. Die Zuschaltung der Wasserturbine 7 erfolgt mit dritter Zuschaltpriorität. Dazu wird der reduzierte Leistungssollwert P_{**red.,2**} über eine Verzweigungsstelle 33 und einen Schalter 34 gegeben. der Steuerkreis für die Wasserturbine ist entsprechend den vorangehend beschriebenen Steuerkreisen der Aggregate 2 und 4 ausgebildet und besteht aus einer Vergleichsstelle 37, einem Regelbaustein 38, einem Verstellventil 39 als Stellglied für die Wasserturbine 7, einem Meßaufnehmer 40 zur Istwerterfassung, einer Verzweigungsstelle 36 zur Abzweigung von P_{**red.,2**} auf eine dem Steuerkreis nachgeschaltete Vergleichsstelle 41, an der, wie vorangehend bei den Steuerkreisen der Aggregate 2 und 4 beschrieben, eine weitere Reduzierung des Sollwertes erfolgt.

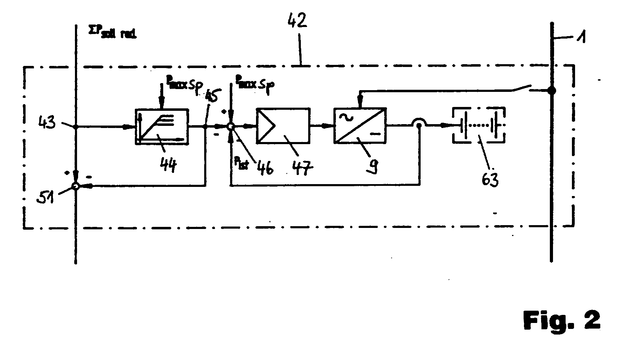

In Fig. 2 ist ein Energiespeichersystem 42 gezeigt, das als Energiespeicher 63 eine Akkumulatorbatterie aufweist. Der gestellte Leistungsverbraucher 9 ist in diesem Fall ein Umformer. Der Steuerkreis für diesen Energiespeicher ist entsprechend dem vorangehend beschriebenen Beispiel des Energiespeichers 42 ausgeführt.

Im folgenden ist eine Tabelle mit Beispielen für ausgesuchte Betriebszustände des Inselnetzes gezeigt, die bei Steuerung des Inselnetzes mit der vorangehend beschriebenen Schaltungsanordnung auftreten. In der Tabelle sind Werte über die momentanen Leistungsab- und -aufnahmen einzelner Netzkomponenten angegeben.

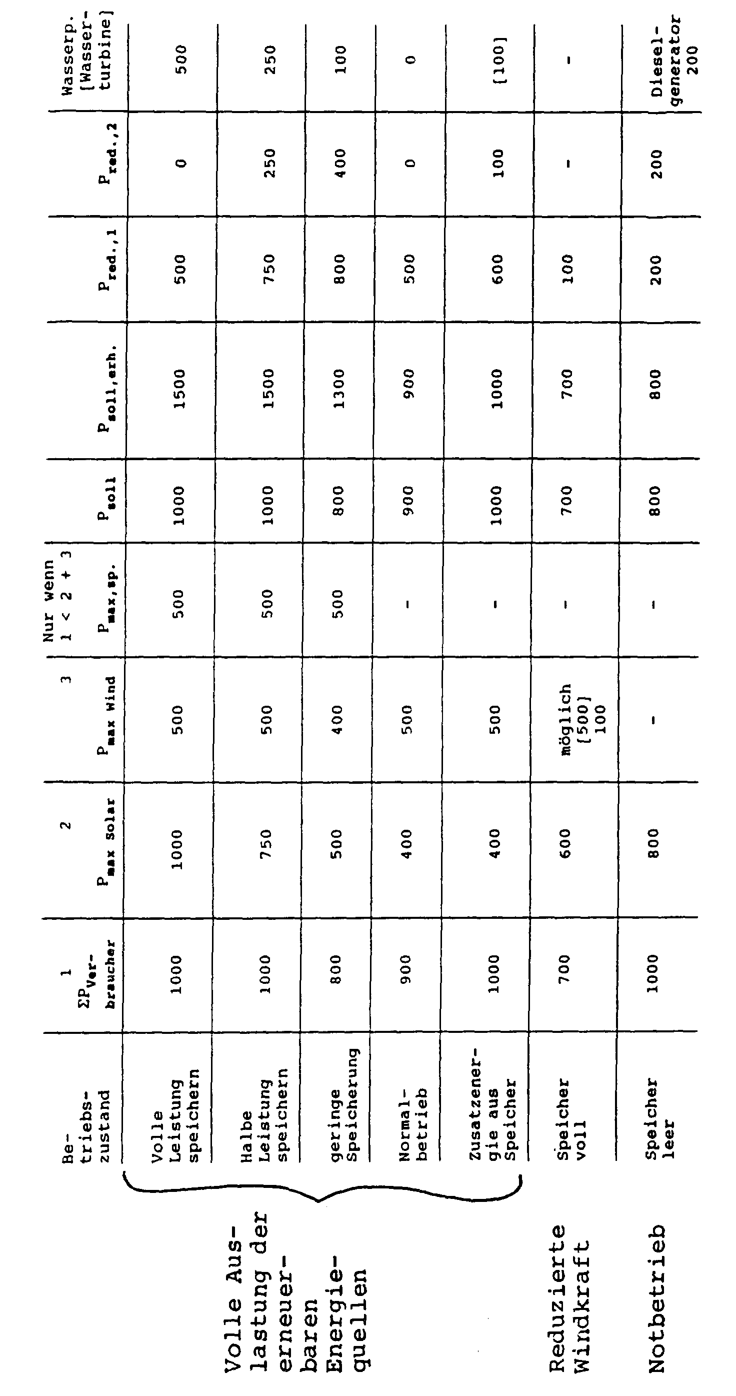

## Patentansprüche

1. Verfahren zum wirtschaftlichen Betrieb eines Inselnetzes mit unterschiedlichen, auch erneuerbaren Energiequellen, die Energiewandler speisen,
dadurch gekennzeichnet, daß
- eine übergeordnete Frequenzregelung für die Energiewandler einen Gesamt-Leistungssollwert vorgibt, der zunächst dem wirtschaftlichsten Primärenergiewandler mit erneuerbarer Energiequelle aufgeschaltet wird,
- nach voller Auslastung dieses Energiewandlers mit der Differenz zum Gesamt-Leistungssollwert das nächstwirtschaftliche Aggregat mit dem Leistungssollwert beaufschlagt wird,
- ein in das Inselnetz eingebundenes Energiespeichersystem (42) mit einem gestellten Leistungsverbraucher (9) aufgefüllt wird,
- der Gesamt-Leistungssollwert aus der übergeordneten Frequenzregelung P_{**soll**} an einer Addierstelle (15) um den maximalen Leistungsbedarf des Energiespeichersystems (42) P_{**max,sp.**} erhöht wird, wenn die momentane abgebbare Summenleistung der Aggregate (2, 4), die von erneuerbaren Energiequellen (3, 5) gespeist sind, größer ist, als der momentane Gesamt-Leistungsverbrauch der Verbraucher (60, 61, 62),
- dieser erhöhte Gesamt-Leistungssollwert P_{**soll,erh.**} für die prioritätsgesteuerte sukzessive Vollast-Zuschaltung der Aggregate (2, 4) herangezogen wird,
- nach erfolgter Zuschaltung dieser Aggregate (2, 4) der verbleibende Rest-Sollwert zur Regelung der Energieaufnahme des Energiespeichersystems (42) herangezogen wird, indem aus dem maximalen Leistungsbedarf P_{**max,sp.**} des Energiespeichersystems (42) und dem Rest-Sollwert an einer Vergleichsstelle (46) des Systems ein Differenzwert P_{**red.,2**} - P_{**max,sp.**} gebildet wird, der als Leistungssollwert für die Regelung der Energieaufnahme dient,
- nach erfolgter Auffüllung des Energiespeichers (63) der Wert P_{**max,sp.**} reduziert oder auf Null gesetzt wird, und
- danach eine Reduzierung des Leistungssollwertes eines der Aggregate (2, 4) erfolgt, die mit erneuerbaren Energiequellen (3, 5) gespeist werden.

2. Schaltungsanordnung zum wirtschaftlichen Betrieb eines Inselnetzes, das aus Energiewandlern besteht, die mit unterschiedlichen, auch erneuerbaren Energiequellen gespeist werden und das schwankenden Energieverbrauch hat, wobei eine übergeordnete Frequenzregelung für die Energiewandler einen Gesamt-Leistungssollwert vorgibt, der vorerst dem wirtschaftlichsten Primärenergiewandler mit erneuerbarer Energiequelle aufgeschaltet wird; erst nach voller Auslastung dieses Energiewandlers wird mit der Differenz zum Gesamt-Leistungssollwert das nächstwirtschaftliche Aggregat als Leistungssollwert beaufschlagt,
dadurch gekennzeichnet, daß in das Inselnetz ein Energiespeichersystem (42) eingebunden ist, dessen Auffüllung mit einem gestellten Leistungsverbraucher (9) erfolgt, daß, wenn die momentane abgebbare Summenleistung der Aggregate (2, 4), die von erneuerbaren Energiequellen (3, 5) gespeist sind, größer ist als der momentane Gesamt-Leistungsverbrauch der Verbraucher (60, 61, 62) der Gesamt-Leistungssollwert aus der übergeordneten Frequenzregelung P_{**soll**} an einer Addierstelle (15) um den maximalen Leistungsbedarf des Energiespeichersystems (42) P_{**max,sp.**} erhöht wird, daß dieser erhöhte Gesamt-Leistungssollwert P_{**soll,erh.**} für die prioritätsgesteuerte sukzessive Vollast-Zuschaltung der Aggregate (2, 4) herangezogen ist, daß nach erfolgter Zuschaltung dieser Aggregate (2, 4) der verbleibende Rest-Sollwert zur Regelung der Energieaufnahme des Energiespeichersystems (42) dient, indem aus dem maximalen Leistungsbedarf P_{**max,sp.**} des Energiespeichersystems (42) und dem Rest-Sollwert an einer Vergleichsstelle (46) des Systems ein Differenzwert P_{**red.,2**} - P_{**max,sp.**} gebildet ist, der als Leistungssollwert für die Regelung der Energieaufnahme dient, daß nach erfolgter Auffüllung des Energiespeichers (63) der Wert P_{**max,sp.**} reduziert oder auf Null gesetzt ist und daß erst dann eine Reduzierung des Leistungssollwertes eines der Aggregate (2, 4) erfolgt, die mit erneuerbaren Energiequellen (3, 5) gespeist sind.

3. Schaltungsanordnung nach Anspruch 2,
dadurch gekennzeichnet, daß bei Vorhandensein mehrerer unterschiedlicher Energiespeichersysteme (42), die aus einem gestellten Leistungsverbraucher (9) zur Einspeisung in den Speicher, dem Energiespeicher (63) selbst und einem Energiewandler zur Umformung der Energie des Speichers in die des Netzes bestehen, die Zuschaltung der gestellten Leistungsverbraucher (9) für die Energiespeicherung in der Reihenfolge der Wirtschaftlichkeit erfolgt, die sich aus der Gesamtwirtschaftlichkeit der Energiespeichersysteme ergibt.

4. Schaltungsanordnung nach Anspruch 3,
dadurch gekennzeichnet, daß der zum Leistungssollwert P_{**soll**} addierte maximale Leistungsbedarf P_{**max,sp.**} aus der Summe des Leistungsbedarfs aller gestellten Leistungsverbraucher (9) der Energiespeichersysteme (42) gebildet ist.

5. Schaltungsanordnung nach einem der Ansprüche 2 bis 4,
dadurch gekennzeichnet, daß einem nur mitlaufenden Dieselaggregat (11) als Primärenergiewandler stets eine Minimalleistung P_{**min,D**} als Leistungssollwert zugeführt wird, um welche der an der Addierstelle (15) gebildete erhöhte Gesamt-Leistungssollwert P_{**soll,erh.**} vor der Zuführung zu den Aggregateregelungen an einer Vergleichsstelle (19) reduziert ist.

6. Schaltungsanordnung nach einem der Ansprüche 2 bis 5,
dadurch gekennzeichnet, daß als Energiespeicher (63) für Inselnetze, Pumpspeicherbecken, Luftdruckspeicher in abgedichteten Höhlen oder Bergwerken, Akkumulatorenbatterien, Wasserstoff-Speicher - gespeist aus einer Elektrolyse - und Dampfdruckbehälter eingesetzt sind.

## Claims

1. Method of economically operating an isolated network comprising different and also renewable energy sources which feed energy converters,
characterized in that
- a coordinating frequency controller for the energy converters specifies a total power set-point value which is initially applied to the most economical primary energy converter with renewable energy source,
- after full utilization of the capacity of said energy converter by the difference with respect to the total power set-point value, the power set-point value is applied to the next most economical unit,
- an energy storage system (42) incorporated in the isolated network is loaded by a set power load (9),
- the total power set-point value from the coordinating frequency controller Pₛₒₗₗ is increased at an addition point (15) by the maximum power requirement of the energy storage system (42) P_{max,sp.} if the instantaneous summated power of the units (2, 4) fed by renewable energy sources (3, 5) is greater than the instantaneous total power consumption of the loads (60, 61, 62),
- this increased total power set-point value P_{soll,erh.} is used for the priority-controlled, successive full-load connection of the units (2, 4),
- after said units (2, 4) have been connected, the remaining residual set-point value is used to control the energy consumption of the energy storage system (42) by deriving from the maximum power requirement P_{max,sp.} of the energy storage system (42) and the residual set-point value a difference value P_{red.,2} - P_{max,sp.} at a comparison point (46) of the system, which difference value serves as power set-point value for the control of the energy consumption,
- after the energy store (63) has been loaded, the value P_{max,sp.} is reduced or set to zero, and
- the power set-point value of one of the units (2, 4) fed by renewable energy sources (3, 5) is then reduced.

2. Circuit arrangement for the economical operation of an isolated network which comprises energy converters fed by different and also renewable energy sources and has fluctuating energy consumption, a coordinating frequency controller specifying a total power set-point value for the energy converters which is initially applied to the most economical primary energy converter with renewable energy source; only after the full capacity of said energy converter has been utilized is the difference with respect to the total power set-point value applied to the next most economical unit as power set-point value,
characterized in that there is incorporated in the isolated network an energy storage system (42) which is loaded by a set power load (9), in that, if the instantaneous deliverable summated power of the units (2, 4) which are fed by renewable energy sources (3, 5) is greater than the instantaneous total power consumption of the loads (60, 61, 62), the total power set-point value from the coordinating frequency controller Pₛₒₗₗ is increased at an addition point (15) by the maximum power requirement P_{max,sp.} of the energy storage system (42), in that this increased total power set-point value P_{soll,erh.} is used for the priority-controlled, successive full-load connection of the units (2, 4), in that after said units (2, 4) have been connected, the remaining residual set-point value serves to control the energy consumption of the energy storage system (42) by deriving from the maximum power requirement P_{max,sp.} of the energy storage system (42) and the residual set-point value a difference value P_{red.,2} - P_{max,sp.} at a comparison point (46) in the system, which difference serves as power set-point value for controlling the energy consumption, in that after the energy store (63) has been loaded, the value P_{max, sp.} is reduced or set to zero, and in that only then is the power set-point value of one of the units (2, 4) fed by renewable power sources (3, 5) reduced.

3. Circuit arrangement according to Claim 2, characterized in that, if there is present a plurality of different energy storage systems (42) which comprise a set power load (9) for feeding the store, the energy store (63) itself and an energy converter for converting the energy of the store into that of the network, the set power loads (9) for the energy storage are connected in the sequence of the economic efficiency which results from the total economic efficiency of the energy storage systems.

4. Circuit arrangement according to Claim 3, characterized in that the maximum power requirement P_{max,sp.} added to the power set-point value Pₛₒₗₗ is formed from the sum of the power requirement of all the set power loads (9) of the energy storage systems (42).

5. Circuit arrangement according to one of Claims 2 to 4, characterized in that a minimum power P_{min,D} is always fed as power set-point value to an only concomitantly running diesel unit (11) as primary energy converter, by which minimum power the increased total power set-point value P_{soll,erh.} formed at the addition point (15) is reduced before being fed to the unit controllers at a comparison point (19).

6. Circuit arrangement according to one of Claims 2 to 5, characterized in that rechargeable batteries, hydrogen stores - fed from electrolysis - and steam pressure containers are used as energy stores (63) for isolated networks, pump storage reservoirs, air pressure reservoirs in sealed caves or mines.

## Revendications

1. Procédé pour l'exploitation économique d'un réseau d'îles avec différentes sources d'énergie renouvelables, qui alimentent des convertisseurs d'énergie, caractérisé en ce que :
- un réglage de fréquence direct permet de déterminer une valeur théorique de la puissance globale pour le convertisseur d'énergie, qui est d'abord appliquée au convertisseur d'énergie primaire le plus rentable avec une source d'énergie renouvelable,
- après exploitation de la capacité totale de ce convertisseur d'énergie avec la valeur résultant de la différence par rapport à la valeur théorique de la puissance globale, la valeur théorique de la puissance est appliquée à l'agrégat du niveau de rentabilité suivant,
- un système d'accumulation d'énergie (42) intégré dans le réseau d'îles est approvisionné par un dissipateur (9) qui a été réglé,
- en un lieu d'addition (15), la puissance maximale nécessaire du système d'accumulation d'énergie (42) p_{max,acc.} est additionnée à la valeur théorique de la puissance globale obtenue à partir du réglage de fréquence direct P_{théor.,} lorsque la somme de la puissance actuelle pouvant être dégagée par les agrégats (2, 4), qui sont alimentés par des sources d'énergie renouvelables (3, 5), est supérieure à la puissance globale actuelle consommée par les dissipateurs (60, 61, 62),
- cette valeur théorique de la puissance globale obtenue par addition P_{théor.,add.} est utilisée pour la mise en circuit à pleine charge successive des agrégats (2, 4) avec contrôle des priorités,
- après la réalisation de la mise en circuit de ces agrégats (2, 4), la valeur théorique restante est appliquée au réglage de l'absorption d'énergie par le système d'accumulation d'énergie (42), dans la mesure où on détermine en un lieu de référence (46) du système la valeur qui résulte de la valeur de la puissance maximale nécessaire P_{max,acc.} du système d'accumulation d'énergie (42) et de la valeur théorique restante, à savoir la différence P_{red.,2} - P_{max.acc.}, laquelle valeur est utilisée comme valeur théorique de la puissance destinée au réglage de l'absorption d'énergie,
- la valeur P_{max,acc.} est diminuée ou égale à zéro lorsque l'accumulateur d'énergie (63) est totalement approvisionné, et
- on effectue ensuite une diminution de la valeur théorique de la puissance de l'un des agrégats (2, 4), qui sont alimentés par des sources d'énergie (3, 5) renouvelables.

2. Structure de commutation pour une exploitation rentable d'un réseau d'îles, qui est constituée de convertisseurs d'énergie, alimentés par différentes sources d'énergie renouvelables, et dont la consommation d'énergie est variable, un réglage de fréquence direct permettant de déterminer une valeur théorique de la puissance globale pour le convertisseur d'énergie, qui est d'abord appliquée au convertisseur d'énergie primaire le plus rentable avec une source d'énergie renouvelable ; uniquement lorsque la capacité totale de ce convertisseur d'énergie a été complètement exploitée, la valeur théorique de la puissance, obtenue par la différence calculée par rapport à la valeur théorique de la puissance globale, est appliquée à l'agrégat du niveau de rentabilité suivant,
caractérisée en ce qu'un système d'accumulation d'énergie (42), approvisionné par un dissipateur (9) réglé, est intégré dans le réseau d'îles, en ce que, en un lieu d'addition (15), la puissance maximale nécessaire du système d'accumulation d'énergie (42) p_{max,acc.} est additionnée à la valeur théorique de la puissance globale obtenue à partir du réglage de fréquences direct P_{théor.}, lorsque la somme de la puissance actuelle pouvant être dégagée par les agrégats (2, 4), qui sont alimentés par des sources d'énergie renouvelables (3, 5), est supérieure à la puissance globale actuelle consommée par les dissipateurs (60, 61, 62), en ce que cette valeur théorique de la puissance globale obtenue par addition P_{théor.,add.} est utilisée pour la mise en circuit à pleine charge successive des agrégats (2, 4) avec contrôle des priorités, en ce qu'après la réalisation de la mise en circuit de ces agrégats (2, 4), la valeur théorique restante est appliquée au réglage de l'absorption d'énergie par le système d'accumulation d'énergie (42), dans la mesure où on détermine en un lieu de référence (46) du système la valeur qui résulte de la valeur de la puissance maximale nécessaire P_{max,acc.} du système d'accumulation d'énergie (42) et de la valeur théorique restante, à savoir la différence P_{red.,2} - P_{max,acc.}, laquelle valeur est utilisée comme valeur théorique de la puissance destinée au réglage de l'absorption d'énergie, en ce que la valeur P_{max,acc.} est diminuée ou égale à zéro lorsque l'accumulateur d'énergie (63) est totalement approvisionné, et en ce qu'on effectue à ce moment là seulement une diminution de la valeur théorique de la puissance de l'un des agrégats (2, 4), qui sont alimentés par des sources d'énergie (3, 5) renouvelables.

3. Structure de commutation selon la revendication 2, caractérisée en ce qu'en présence de plusieurs systèmes d'accumulation d'énergie (42) différents, qui sont constitués d'un dissipateur (9) réglé. destiné à stocker l'énergie dans un accumulateur, dans l'accumulateur d'énergie (63) proprement dit, et d'un convertisseur d'énergie destiné à transformer l'énergie de l'accumulateur en énergie du réseau, la mise en circuit des différents dissipateurs (9) réglés, destinés à stocker l'énergie, est réalisée dans un ordre hiérarchique établi en fonction de la rentabilité et défini à partir de la rentabilité totale des différents systèmes d'accumulation d'énergie.

4. Structure de commutation selon la revendication 3, caractérisée en ce que la valeur de la puissance maximale nécessaire P_{mas,acc.} additionnée à la valeur théorique de la puissance P_{théor.} est déterminée à partir de la somme de la puissance nécessaire de tous les dissipateurs (9) des systèmes d'accumulation d'énergie (42).

5. Structure de commutation selon l'une quelconque des revendications 2 à 4, caractérisée en ce qu'une valeur de puissance minimale P_{_{min.D}}, représentant la valeur théorique de la puissance, est attribuée en permanence à un moteur diesel (11) qui est uniquement couplé à l'ensemble et qui est utilisé comme convertisseur d'énergie primaire, cette valeur minimale étant utilisée pour être soustraite de la valeur théorique de la puissance globale P_{théor.,add.}, déterminée au lieu d'addition (15), avant d'être attribuée aux réglages des agrégats en un lieu de référence (19).

6. Structure de commutation selon l'une quelconque des revendications 2 à 5, caractérisée en ce que les bassins d'accumulation par pompage, les accumulateurs de pression atmosphérique dans les fouilles étanches ou les galeries de mines, les batteries d'accumulateurs, les accumulateurs d'hydrogène - alimentés à partir d'une électrolyse - et les récipients sous pression de vapeur peuvent être utilisés comme accumulateurs d'énergie (63) destinés aux réseaux d'îles.
